# EUROPEAN PATENT SPECIFICATION

(11) **EP 4 203 093 B1**
(45) Date of publication and mention of the grant of the patent: **14.01.2026**
(21) Application number: 22799058.7
(22) Date of filing: 29.04.2022
(51) Int. Cl.: H01M 4/04, H01M 4/13, H01M 4/38, H01M 4/139, H01M 4/62, H01M 10/052, H01M 4/583, H01M 4/1397, H01M 4/136, H01M 4/36, H01M 4/58, H01M 4/02

(54) **CATHODE FOR LITHIUM SECONDARY BATTERY, MANUFACTURING METHOD THEREFOR, AND LITHIUM SECONDARY BATTERY COMPRISING SAME**
KATHODE FÜR LITHIUMSEKUNDÄRBATTERIE, HERSTELLUNGSVERFAHREN DAFÜR UND LITHIUMSEKUNDÄRBATTERIE DAMIT
CATHODE POUR BATTERIE SECONDAIRE AU LITHIUM, SON PROCÉDÉ DE FABRICATION ET BATTERIE SECONDAIRE AU LITHIUM LA COMPRENANT

(30) Priority: 07.05.2021 KR 20210058926; 28.04.2022 KR 20220052596
(43) Date of publication of application: 28.06.2023
(73) Proprietor: LG Energy Solution, Ltd., Seoul 07335 (KR)
(72) Inventor: KIM, Minsu, Daejeon 34122 (KR); HAN, Dong Hyeop, Daejeon 34122 (KR); HONG, Kyungsik, Daejeon 34122 (KR); SHIN, Dongseok, Daejeon 34122 (KR)
(74) Representative: Goddar, Heinz J.
(86) International application number: PCT/KR2022/006159
(87) International publication number: WO 2022/235015

(56) References cited:
- EP-A1- 3 767 711
- CN-A- 103 840 125
- KR-A- 20160 051 610
- KR-A- 20160 051 610
- KR-A- 20160 078 734
- KR-A- 20190 026 626
- KR-A- 20200 089 788
- KR-A- 20200 089 788
- US-A1- 2019 386 342
- DILLARD CAITLIN ET AL: "Binder-free, freestanding cathodes fabricated with an ultra-rapid diffusion of sulfur into carbon nanofiber mat for lithium sulfur batteries", MATERIALS TODAY ENERGY, vol. 9, 1 September 2018 (2018-09-01), pages 336 - 344, XP055871550, ISSN: 2468-6069, DOI: 10.1016/j.mtener.2018.06.004
- DILLARD CAITLIN, CHUNG SHENG-HENG, SINGH ARVINDER, MANTHIRAM ARUMUGAM, KALRA VIBHA: "Binder-free, freestanding cathodes fabricated with an ultra-rapid diffusion of sulfur into carbon nanofiber mat for lithium sulfur batteries", MATERIALS TODAY ENERGY, vol. 9, 1 September 2018 (2018-09-01), pages 336 - 344, XP055871550, ISSN: 2468-6069, DOI: 10.1016/j.mtener.2018.06.004

## Description

### [Technical Field]

The present application claims the benefits of priorities based on Korean Patent Application No. 2021-0058926 filed on May 07, 2021 and Korean Patent Application No. 2022-0052596 filed on April 28, 2022.

The present invention relates to a positive electrode for a lithium secondary battery, a manufacturing method thereof, and a lithium secondary battery comprising the same.

### [Background Art]

Recently, with the rapid development in the field of electronic devices and electric vehicles, the demand for secondary batteries is increasing. In particular, with the trend toward miniaturization and weight reduction of portable electronic devices, there is a growing demand for secondary batteries having a high energy density that can cope with them.

Among the secondary batteries, a lithium-sulfur secondary battery is a secondary battery that uses sulfur-based compounds having a sulfur-sulfur bond as a positive electrode active material, and uses alkali metals such as lithium, carbon-based materials in which intercalation and deintercalation of metal ions such as lithium ions occur, or silicon or tin, which forms an alloy with lithium, as a negative electrode active material. Specifically, in the case of the lithium-sulfur secondary battery, during the discharging which is a reduction reaction, as the sulfur-sulfur bond is cut off, the oxidation number of sulfur decreases, and during the charging which is an oxidation reaction, as the oxidation number of sulfur increases, the sulfur-sulfur bond is re-formed. Through this oxidation-reduction reaction, electrical energy is stored and generated.

In particular, in the case of lithium-sulfur secondary batteries, sulfur used as a positive electrode active material in the lithium-sulfur secondary batteries has a theoretical energy density of 1.675 mAh/g, and thus has a theoretical energy density of about five times higher than the positive electrode active material used in conventional lithium secondary batteries, and thus they are batteries capable of expressing high power and high energy density. In addition, since sulfur has the advantage of being cheap and rich in resources and thus being readily available and environmentally friendly, sulfur is drawing attention as an energy source not only for portable electronic devices but also for medium and large devices such as electric vehicles.

Since sulfur has an electrical conductivity of 5x10⁻³⁰ S/cm, which is a nonconductor without electrical conductivity, there is a problem that the movement of electrons generated by the electrochemical reaction is difficult. Accordingly, sulfur is compounded with an electrically conductive material such as carbon that can provide an electrochemical reaction site, and the sulfur-carbon composite produced thereby is used.

In order to use the sulfur-carbon composite as a positive electrode active material, a method of manufacturing a positive electrode through a slurry process of preparing a slurry together with an electrically conductive material and a binder, and then applying the slurry to a current collector is generally used.

However, the positive electrode manufactured by this slurry process has a problem that the loading amount of the positive electrode active material in the positive electrode is lowered due to the electrically conductive material and the binder used in preparing the slurry, so that the energy density is reduced. In addition, since the slurry process comprises detailed processes such as mixing, coating, drying, and rolling, there is a problem that time and cost are increased.

Therefore, it is necessary to develop a technology capable of manufacturing a positive electrode for a high-loading lithium secondary battery by a simple process.

### [Prior Art Document]

### [Patent Documents]

(Patent Document 1) Korean Patent Publication No. 2018-0055230
(Patent Document 2) Japanese Patent Application No. 2018-113142

CN103840125 and US2019386342 also disclose positive electrodes for lithium secondary batteries of the prior art.

### [Disclosure]

### [Technical Problem]

Accordingly, the inventors of the present invention have conducted various studies to solve the above problems, and as a result, have confirmed that a lithium secondary battery comprising a positive electrode formed by stacking a wet positive electrode active material layer prepared by a wet process and a dry positive electrode active material layer prepared by a dry process has excellent capacity, high rate characteristic, overvoltage and lifetime characteristic, and thus have completed the present invention.

Accordingly, it is an object of the present invention to provide a positive electrode for a lithium secondary battery having improved capacity, high-rate characteristic, overvoltage and lifespan characteristic of the battery, and a method for manufacturing the same.

It is another object of the present invention to provide a lithium secondary battery comprising the positive electrode for the lithium secondary battery.

### [Technical Solution]

In order to achieve the above objects, the present invention provides a positive electrode for a lithium secondary battery comprising a positive electrode current collector;
a wet positive electrode active material layer formed on one surface of the positive electrode current collector;
and a dry positive electrode active material layer formed on the wet positive electrode active material layer,
wherein the wet positive electrode active material layer includes a sulfur-carbon composite, a binder, and an electrically conductive material, and
the dry positive electrode active material layer is composed of a carbon-containing sulfur melt.

In addition, the present invention provides a method for manufacturing a positive electrode for a lithium secondary battery comprising the steps of (1) applying a slurry for a positive electrode containing the sulfur-carbon composite, the binder and the electrically conductive material to one surface of the positive electrode current collector to form a wet positive electrode active material layer; and
(2) attaching a dry positive electrode active material layer, which is a free-standing film-type positive electrode material, to one surface of the wet positive electrode active material layer, wherein the dry positive electrode active material layer, which is a free-standing film-type positive electrode material, is prepared by a process comprising the steps of, (a) mixing sulfur and a porous carbon material; (b) heat-treating the mixture formed in step (a); and(c) filling the sulfur-carbon composite formed in step(b) in a container, and then pressing it to form a carbon-containing sulfur melt.

In addition, the present invention provides a lithium secondary battery comprising the positive electrode for the lithium secondary battery described above; a negative electrode comprising lithium metal or a lithium alloy; a separator positioned between the positive electrode and the negative electrode; and an electrolyte impregnated with the positive electrode, the negative electrode and the separator.

### [Advantageous Effects]

The positive electrode for the lithium secondary battery according to the present invention may exhibit improved effects in the capacity, overvoltage, high rate characteristic, and lifetime characteristic due to the laminated structure of the wet positive electrode active material layer and the dry positive electrode active material layer, as compared to the positive electrode for the general lithium secondary battery comprising only the wet positive electrode active material layer.

### [Description of Drawings]

FIG. 1 shows longitudinal cross-sections of positive electrodes for the lithium-sulfur secondary battery prepared in Example 1, Comparative Example 1, and Comparative Example 2, respectively.
FIGs. 2A and 2B are graphs showing changes in specific capacity and voltage during charging and discharging of lithium-sulfur secondary batteries manufactured in Example 1, Comparative Example 1, and Comparative Example 2, respectively.
FIG. 3 is a graph showing the lifetime characteristics of lithium-sulfur secondary batteries manufactured in Example 1, Comparative Example 1, and Comparative Example 2, respectively.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" include plural referents unless the context clearly dictates otherwise. It is to be understood that the terms "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

As used herein, the term "wet positive electrode active material layer" refers to a positive electrode active material layer for a general lithium secondary battery, and it may be prepared by a process comprising the steps of applying, drying and rolling a slurry for a positive electrode, which is prepared by mixing and dispersing a positive electrode active material, a binder, and an electrically conductive material in a solvent, on a positive electrode current collector.

As used herein, the term "dry positive electrode active material layer" refers to a positive electrode active material layer made of only sulfur and a porous carbon material, and it may be formed in the form of a freestanding film by heat-treating sulfur and the carbon material and then pressurizing them. Specifically, the dry positive electrode active material layer is composed of a carbon-containing sulfur melt having a form in which the porous carbon material is dispersed inside the sulfur melt.

In the present invention, the term "porosity" means the ratio of the volume occupied by the pores to the total volume in a structure, and its unit is %. In the present invention, the measurement of porosity is not particularly limited. For example, according to one embodiment of the present invention, the micro and meso-pore volume may be measured by, for example, a Brunauer-Emmett-Teller (BET) measurement method or a Hg porosimeter.

### Positive electrode for lithium secondary battery

The present invention relates to a positive electrode for a lithium secondary battery comprising a wet positive electrode active material layer and a dry positive electrode active material layer, wherein the positive electrode for the lithium secondary battery comprises a positive electrode current collector; the wet positive electrode active material layer formed on one surface of the positive electrode current collector; and the dry positive electrode active material layer formed on one surface of the wet positive electrode active material layer, wherein the wet positive electrode active material layer includes a sulfur-carbon composite, a binder, and an electrically conductive material, and wherein the dry positive electrode active material layer is composed of carbon-containing sulfur melt.

In general, since the dry electrode manufactured by the dry process does not contain a binder which is a resistance element, it has a lower internal resistance and less overvoltage than the wet electrode, so that the capacity is superior. In addition, since the dry electrode has a low moisture content compared to the wet electrode and thus has a low probability of deterioration of the negative electrode due to moisture, it is superior in terms of lifetime characteristics. However, the conventional dry electrode has a problem in the expression of pouch cell performance because it has a large contact resistance between the dry electrode and the current collector.

Since the positive electrode for the lithium secondary battery according to the present invention has a structure in which the current collector, the wet positive electrode active material layer and the dry positive electrode active material layer are sequentially stacked, it is possible to improve the problems of such a conventional dry electrode.

First, since the wet positive electrode active material layer is coated on the current collector, the resistance between the current collector and the wet positive electrode active material layer can be reduced. In addition, since the dry positive electrode active material layer is introduced on the wet positive electrode active material layer, sulfur is melted when pressed, which can maintain the connectivity between the wet positive electrode active material layer and the dry positive electrode active material layer. If sulfur is not comprised in the wet positive electrode active material layer, it is difficult to maintain the connectivity between the active material layers.

The wet positive electrode active material layer may serve to facilitate mass transfer by not only facilitating the contact between the current collector and the active material layer, but also having high porosity.

In the present invention, the positive electrode current collector supports the positive electrode active material layer to be described later, and serves to transfer electrons between the external conductive wire and the positive electrode active material layer.

The positive electrode current collector is not particularly limited as long as it has high electronic conductivity without causing a chemical change in the lithium secondary battery. For example, as the positive electrode current collector, copper, stainless steel, aluminum, nickel, titanium, palladium, sintered carbon, copper or stainless steel whose surface is treated with carbon, nickel, silver, etc., aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

In the present invention, the wet positive electrode active material layer may comprise a sulfur-carbon composite, which is a positive electrode active material, a binder, and an electrically conductive material.

The positive electrode active material may be contained in an amount of 40 to 80 % by weight based on the total weight of the wet positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity of the wet positive electrode active material layer and the dry positive electrode active material layer may be insufficient. If the content of the positive electrode active material exceeds 80% by weight, the resistance to mass transfer may be increased.

The sulfur-carbon composite means a composite in which the sulfur is supported on the porous carbon material. For example, the sulfur-carbon composite may be a state in which sulfur is attached or coated on the surface of the porous carbon material. In addition, the sulfur-carbon composite may be a state in which sulfur is also attached to, filled in or coated with the internal pores of the porous carbon material; or a state in which the sulfur penetrates and adheres to the inside of the porous carbon material.

In addition, the sulfur may be at least one selected from the group consisting of inorganic sulfur (S₈), Li₂Sₙ(n ≥ 1, n is an integer), organosulfur compound and a carbon-sulfur polymer ((C₂Sₓ)ₙ, 2.5 ≤ x ≤ 50, n ≥ 2, x and n are integers).

In addition, the content of sulfur may be 50% by weight or more, 55% by weight or more, or 60% by weight or more based on the total weight of the sulfur-carbon composite, and may be 70 % by weight or less, 75 % by weight or less, 80 % by weight or less. If the content of sulfur is less than 50% by weight, the ratio of sulfur, which is an electrochemically active material, is reduced, and thus the sulfur coating layer formed on the surface of the porous carbon material may become thinner, so that it may be difficult to form a sulfur-carbon composite properly, or the amount of sulfur contained in the interior of the porous carbon material may be reduced, so that the battery capacity may be reduced. In addition, if the content of sulfur exceeds 80% by weight, sulfur, which is non-conductive, blocks the conductive structure of the porous carbon material, thereby blocking electrochemical activity, and thus the operation of the battery may be limited.

In addition, since the porous carbon material has pores or hollows formed therein, it may have high specific surface area properties, and the porous carbon material may be any porous carbon material commonly used in the art.

The porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon. Preferably, the porous carbon material may be carbon nanotubes.

In addition, the shape of the carbon nanotube is not particularly limited, and for example, may have a specific surface area of 200 m²/g to 500 m²/g and a particle size of 10 *µ*m to 30 *µ*m. In this case, the particle size may mean the length of a portion corresponding to the longest axis of the particle.

In addition, the content of the porous carbon material may be 20% by weight or more, 25% by weight or more, 30% by weight or more, or 35% by weight or more based on the total weight of the sulfur-carbon composite, and may be 40% by weight or less, 45% by weight or less, or 50% by weight or less. If the porous carbon material is less than 20% by weight, the surface area and space for sulfur to be filled, attached or coated may not be sufficiently provided, so that the electrochemical availability (reactivity) of sulfur may be reduced. If the porous carbon material exceeds 50% by weight, the content of sulfur is relatively lowered, so that when applied to a lithium secondary battery, the energy density of the battery may be excessively reduced.

The binder is a component that assists bonding between the positive electrode active material and the electrically conductive material, and assists in bonding to the current collector. The binder may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise at least one selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the wet positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be insufficient. If the content of the binder exceeds 30% by weight, the adhesive force is improved, but the content of the positive electrode active material is reduced by that amount, and thus the capacity of the battery may be lowered.

The electrically conductive material contained in the positive electrode is not particularly limited as long as it has excellent electrical conductivity without causing side reactions in the internal environment of the lithium secondary battery and without causing chemical changes in the battery. The electrically conductive material may be typically graphite or conductive carbon, and for example, as the electrically conductive material, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more, but is not necessarily limited thereto.

The electrically conductive material may be generally contained in an amount of 0.5% by weight to 30% by weight based on the total weight of the wet positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5 % by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used. In addition, the addition of the electrically conductive material as described above may be substituted by the addition of the second conductive coating layer to the positive electrode active material, if necessary.

In the present invention, the term "porosity" means the ratio of the volume occupied by the pores to the total volume in a structure, and its unit is %. In the present invention, the measurement of the porosity is not particularly limited. For example, according to one embodiment of the present invention, the micro and meso-pore volume can be measured by a Brunauer-Emmett-Teller (BET) measurement method or a Hg porosimeter.

In addition, the density of the wet positive electrode active material layer may be 0.2 to 1.4 g/cm³, and specifically, the density of the wet positive electrode active material layer may be 0.2 g/cm³ or more, 0.3 g/cm³ or more, or 0.5 g/cm³ or more, and may be 1.0 g/cm³ or less, 1.2 g/cm³ or less, or 1.4 g/cm³ or less. If the density is less than 0.2 g/cm³, the contact resistance may be increased, and if the density is greater than 1.4 g/cm³, the resistance to mass transfer may be increased.

In addition, the loading amount of the wet positive electrode active material layer may be 0.1 mAh/cm² to 0.5 mAh/cm², and specifically, the loading amount of the wet positive electrode active material layer may be 0.1 mAh/cm² or more, 0.2 mAh/cm² or more, or 0.3 mAh/cm² or more, and may be 0.4 mAh/cm² or less or 0.5 mAh/cm² or less. If the loading amount of the wet positive electrode active material layer satisfies the above range, it may be good for maintaining the performance of the battery. The loading amount of the wet positive electrode active material layer may be 2 to 20% based on the total of the loading amount of the dry positive electrode active material layer as described below, and specifically, the loading amount of the wet positive electrode active material layer may be 2% or more, or 3% or more, and may be 10% or less, 15% or less, or 20% or less.

In addition, the porosity of the wet positive electrode active material layer may be 30% to 90%, and specifically, may be 30% or more, 50% or more, 60% or more, or 70% or more, and may be 80% or less, 85% or less, or 90% or less. In addition, if the porosity satisfies such a porosity range, the performance of the battery may be maintained well, while maintaining the durability of the battery.

In addition, the weight of the wet positive electrode active material layer may be 1 to 15% by weight, based on the total weight of the wet positive electrode active material layer and the dry positive electrode active material layer, and specifically, may be 1% by weight or more, 3% by weight or more, or 5% by weight or more, and may be 10% by weight or less, 13% by weight or less, or 15% by weight or less. If the weight of the wet positive electrode active material layer is less than 1% by weight, the adhesive force between the current collector and the dry positive electrode active material layer may be lowered, and if the weight of the wet positive electrode active material layer exceeds 15% by weight, it may act as a resistance of the battery due to the binder included in the wet positive electrode active material layer.

In addition, the thickness of the wet positive electrode active material layer may be 1 to 30% based on the total thickness of the wet positive electrode active material layer and the dry positive electrode active material layer, and specifically, may be 1% or more, 5% or more, or 10% or more, and may be 20% or less, 25% or less, or 30% or less. If the thickness of the wet positive electrode active material layer is less than 1%, the adhesive force between the current collector and the dry positive electrode active material layer may be reduced. If the thickness of the wet positive electrode active material layer exceeds 30%, it may act as a resistance of the battery, due to the binder contained in the inside of the wet positive electrode active material layer.

In the present invention, the dry positive electrode active material layer may comprise a carbon-containing sulfur melt. The carbon-containing sulfur melt may have a form in which a porous carbon material is dispersed in the sulfur melt.

The dry positive electrode active material layer may include a positive electrode material in the form of a free-standing film consisting only of carbon-containing sulfur melt without a binder and an electrically conductive material contained in the wet positive electrode active material layer.

Since the positive electrode material in the form of a free-standing film is prepared by a dry process using sulfur and the porous carbon material as raw materials, only sulfur and the porous carbon material are contained in the positive electrode material, so that there is an advantage that the loading amount is high when used as a positive electrode. In addition, the dry process may omit a series of processes such as mixing, defoaming, coating, drying and rolling required in the conventional slurry process, thereby reducing process costs. In addition, since the dry process does not use a slurry, the carbon-containing sulfur melt produced by the dry process does not contain any binder, and thus the deterioration in the performance of the battery due to the binder resistance may be fundamentally eliminated. In addition, since the carbon-containing sulfur melt manufactured by the dry process does not contain an electrically conductive material at all, the problem of deterioration in formability due to the electrically conductive material lacking cohesive force may be minimized.

In addition, the positive electrode material in the form of the free-standing film is connected by a sulfur melt formed on the surface of the carbon material, in a state in which the porous carbon material forms a skeleton of the positive electrode material, thereby representing the form of a free-standing film. Among the porous carbon materials, carbon nanotubes have more connection points due to their structural characteristics, which may be more advantageous when forming a free-standing film. Specifically, since the carbon nanotubes have a shape having an aspect ratio of greater than 1, they may be advantageously connected to each other to form a free-standing film.

In addition, the positive electrode material in the form of a free-standing film may be a positive electrode material having an adhesive force of 10 gf/cm or more in the positive electrode material after the electrode is press-molded. The adhesive force is due to the property that sulfur is melted and aggregated with surrounding sulfur during the pressing process, and if the adhesive force of the positive electrode material is less than 10 gf/cm, it may be difficult to form the electrode due to insufficient adhesive force between the positive electrodes. Specifically, the adhesive force may be 10 gf/cm or more, 15 gf/cm or more, 20 gf/cm or more, 25 gf/cm or more, 30 gf/cm or more, or 35 gf/cm or more. In addition, the upper limit of the adhesive force may be 50 gf/cm or less, 60 gf/cm or less, 70 gf/cm or less, 80 gf/cm or less, 90 gf/cm or less, or 100 gf/cm or less, but is not limited thereto. The higher the adhesive force in the positive electrode material, the better in terms of formability, durability and battery performance.

In addition, the carbon-containing sulfur melt contained in the dry positive electrode active material layer may be composed of 50% by weight to 80% by weight of sulfur and 20% by weight to 50% by weight of the porous carbon material. Sulfur may be contained in an amount of 50% by weight or more, 55% by weight or more, or 60% by weight or more, based on the total weight of the carbon-containing sulfur melt, and may be contained in an amount of 70% by weight or less, 75% by weight or less, 80% by weight or less. If sulfur is contained in an amount less than 50 % by weight, the ratio of sulfur, which is an electrochemically active material, is decreased, and the thickness of the sulfur melt formed on the surface of the porous carbon material becomes thinner, and thus it is difficult for the carbon-containing sulfur melt to be molded properly or the amount of sulfur may be reduced to decrease the capacity of the battery. In addition, if sulfur is contained in an amount exceeding 80% by weight, sulfur, which is non-conductive, blocks the conductive structure of the porous carbon material, thereby blocking electrochemical activity, and thus the operation of the battery may be limited. When sulfur is contained in the carbon-containing sulfur melt in an amount of 50% by weight to 80% by weight, since the positive electrode material can exhibit a strong self-cohesive force and the porous carbon material can be well dispersed in the sulfur melt, a positive electrode of a free-standing shape can be well formed.

In addition, the porosity of the dry positive electrode active material layer may be 68% or less, 65% or less, 60% or less, or 55% or less, and may be 45% or more or 50% or more. If the porosity of the dry positive electrode active material layer exceeds 68%, the durability of the positive electrode may be reduced. If the porosity of the dry positive electrode active material layer is less than 45%, since the space where the electrochemical reaction takes place in the pores becomes narrow, normal operation of the cell may become difficult.

In addition, the loading amount of the dry positive electrode active material layer may be 2.5 mAh/cm² to 5.0 mAh/cm², and if the loading amount of the dry positive electrode active material layer satisfies the above range, it may be good for maintaining the performance of the battery.

In addition, the weight of the dry positive electrode active material layer may be 85 to 99% by weight based on the total weight of the wet positive electrode active material layer and the dry positive electrode active material layer, and specifically, may be 85% by weight or more, 87% by weight or more, or 90% by weight or more and may be 95% by weight or less, 97% by weight or less, or 99% by weight or less. If the weight of the dry positive electrode active material layer is less than 85% by weight, since the weight of the wet positive electrode active material layer is relatively large, it may act as a resistance to the battery due to the binder contained in the wet positive electrode active material layer. If the weight of the dry positive electrode active material layer exceeds 99% by weight, the adhesive force between the current collector and the dry positive electrode active material layer may be lowered.

In addition, the thickness of the dry positive electrode active material layer may be 70 to 99% based on the total thickness of the wet positive electrode active material layer and the dry positive electrode active material layer, and specifically, may be 70% or more, 75% or more, or 80% or more, and may be 90% or less, 95% or less, or 99% or less. If the thickness of the dry positive electrode active material layer is less than 70%, since the weight of the wet positive electrode active material layer is relatively large, it can act as a resistance to the battery due to the binder contained in the wet positive electrode active material layer. If the thickness of the dry positive electrode active material layer exceeds 99%, the adhesive force between the current collector and the dry positive electrode active material layer may be reduced.

### Manufacturing method of positive electrode for lithium secondary battery

The present invention also relates to a method for manufacturing a positive electrode for a lithium secondary battery, which comprises the steps of (1) applying a slurry for a positive electrode containing the sulfur-carbon composite, the binder and the electrically conductive material to one surface of the positive electrode current collector to form a wet positive electrode active material layer; and (2) attaching a dry positive electrode active material layer, which is a free-standing film-type positive electrode material, to one surface of the wet positive electrode active material layer.

Hereinafter, the present invention will be described in more detail for each step.

In the present invention, in step (1), the slurry for the positive electrode containing the sulfur-carbon composite, the binder and the electrically conductive material may be applied to one surface of the positive electrode current collector to form a wet positive electrode active material layer. At this time, the characteristics of the sulfur-carbon composite, the binder, the electrically conductive material, and the positive electrode current collector are as described above.

Specifically, the slurry for the positive electrode may be applied to a positive electrode current collector and vacuum dried to form a positive electrode for a lithium secondary battery. The slurry for the positive electrode may be applied to the positive electrode current collector at an appropriate thickness depending on the viscosity of the slurry and the thickness of the positive electrode to be formed, and preferably may be appropriately selected within the range of 10 nm to 1 *µ*m.

In this case, there is no limitation on the method of coating the slurry for the positive electrode, and the method of coating the slurry may comprise, for example, a doctor blade coating, a dip coating, a gravure coating, a slit die coating, a spin coating, a comma coating, a bar coating, a reverse roll coating, a screen coating, a cap coating method and the like.

In addition, the slurry for the positive electrode may be prepared by mixing and stirring the sulfur-carbon composite, the binder, and the electrically conductive material with a solvent.

As a solvent, one capable of uniformly dispersing the sulfur-carbon composite, the binder, and the electrically conductive material is used. As such a solvent, water is most preferable as an aqueous solvent, and in this case, the water may be secondary distilled water (DW) or tertiary distilled water (Deionized Water (DIW)). However, the present invention is not necessarily limited thereto, and if necessary, a lower alcohol that can be easily mixed with water may be used. The lower alcohol may be methanol, ethanol, propanol, isopropanol, and butanol, and the like, and, preferably, they can be used in a mixture with water.

In addition, mixing for the preparation of the slurry for the positive electrode may be stirred in a conventional manner using a conventional mixer such as a paste mixer, a high-speed shear mixer, or a homo-mixer.

The positive electrode can be manufactured by applying the prepared slurry for the positive electrode on the positive electrode current collector and then drying it, and if necessary, it can be manufactured by compression molding on the positive electrode current collector in order to improve the electrode density.

In the present invention, in step (2), a dry positive electrode active material layer, which is a free-standing film-type positive electrode material, may be attached to one surface of the wet positive electrode active material layer.

In the present invention, the free-standing film-type positive electrode material is prepared by a process comprising the steps of (a) mixing sulfur and a porous carbon material; (b) heat-treating the mixture formed in step (a); and (c) filling the sulfur-carbon composite formed in step (b) in a container, and then pressing it.

In step (a), a mixture of sulfur and the porous carbon material, which are raw materials, may be formed. In this case, the type and appropriate weight range of sulfur and the porous carbon material are the same as described above.

In addition, in step (b), the mixture formed in step (a) may be heat-treated to form a sulfur-carbon composite.

When the mixture of sulfur and the porous carbon material is heated, the sulfur is changed to a liquid state, and the liquid sulfur enters the inside of the porous carbon material or is coated or adhered to the surface so that the sulfur is supported or filled in the porous carbon material, and/or a coated sulfur-carbon composite can be formed. For example, if the porous carbon material is a carbon nanotube, sulfur in a liquid state may be sucked into the carbon nanotube through a capillary phenomenon and thus the sulfur may be supported on the carbon nanotube.

The heat treatment may be performed above the melting point of sulfur. For example, the temperature for the heat treatment may be 130 °C or more, 140 °C or more, or 150 °C or more and may be 160 °C or less, 165 °C or less, or 170 °C or less. If the temperature for the heat treatment is less than 130 °C, sulfur does not melt, it may be difficult to form a composite supported or coated on the carbon material. If the temperature for the heat treatment exceeds 170°C, although the sulfur-carbon composite can be manufactured, volatilization of sulfur can occur, causing loss of sulfur and deterioration of the manufacturing equipment.

In addition, the time for the heat treatment is possible as long as it is an appropriate time enough for sulfur to be melted and supported on the porous carbon material by heat treatment, and may be 25 minutes or more or 30 minutes or more, and may be 40 minutes or less, 45 minutes or less, or 50 minutes or less.

In addition, in the step (c), the positive electrode material in the form of a free-standing film made of a carbon-containing sulfur melt can be manufactured by filling a container with the sulfur-carbon composite formed in the step (b) and then pressurizing it.

The sulfur-carbon composite exhibits strong self-adhesive force in a pressurized state. Specifically, in the pressurized state, sulfur on the surface of the sulfur-carbon composite is partially melted to give connectivity between the composites, thereby exhibiting a strong self-adhesive force. Accordingly, if pressure is applied to the particulate sulfur-carbon composites, sulfur is melted to form a sulfur melt, and a carbon-containing sulfur melt, in which the carbon material is dispersed inside the sulfur melt, is formed. Since a cohesive force is generated between the particles of the dispersed carbon material and the carbon material functions as a skeleton and has flexibility in itself, a free-standing film is formed.

The pressure during the pressurization may be sufficient to form a free-standing film by sufficiently generating cohesive force between the sulfur-carbon composites. For example, the pressure during the pressurization may be 0.8 Mpa or more, 0.9 Mpa or more, or 1 Mpa or more, and may be 5 Mpa or less, 8 Mpa or less, 10 Mpa or less, 13 Mpa or less or 15 Mpa or less. If the pressure during the pressurization is less than 0.8 Mpa, the cohesive force between the sulfur-carbon composites is weak, and the free-standing film made of a carbon-containing sulfur melt may not be formed. If the pressure during the pressurization exceeds 15 Mpa, the porosity of the positive electrode material is too low, and thus the structure of the electrode may be collapsed.

### Lithium secondary battery

In addition, the present invention provides a lithium secondary battery including the positive electrode for the lithium secondary battery.

The lithium secondary battery according to the present invention includes a positive electrode; a negative electrode; and an electrolyte interposed therebetween, wherein the positive electrode comprises the positive electrode for the lithium secondary battery according to the present invention.

The positive electrode is as described above, and comprises the free-standing film-type positive electrode material in the positive electrode active material layer, and is characterized in that the positive electrode active material layer and the positive electrode current collector are bonded through a binder layer.

In particular, the positive electrode of the present invention can be loaded with a larger amount of sulfur than the conventional electrode, by including a free-standing film-type positive electrode material prepared by a dry process without the need for a binder or the electrically conductive material in the positive electrode active material layer. Accordingly, in the present invention, the loading amount of sulfur in the positive electrode, that is, the mass of sulfur per unit area of the positive electrode active material layer in the positive electrode may be 3.0 to 5.0 mAh/cm². As such, with a high loading amount of sulfur, a lithium secondary battery comprising the positive electrode according to the present invention may exhibit excellent discharging capacity and lifetime characteristics.

The negative electrode may be manufactured by forming a negative electrode active material layer containing the negative electrode active material on at least one surface of the negative electrode current collector, or may be a negative electrode active material layer (e.g., a lithium metal plate, a lithium metal thin film, or a lithium foil) alone.

The negative electrode current collector is for supporting the negative electrode active material layer, and is the same as that described in the positive electrode current collector.

The negative electrode active material layer comprises a negative electrode active material, and may further comprise an electrically conductive material, a binder, etc.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) may be, for example, crystalline carbon, amorphous carbon, or mixtures thereof. The material capable of reacting with the lithium ion (Li⁺) to reversibly form the lithium-containing compound may be, for example, tin oxide, titanium nitrate, or silicon. In addition, the lithium alloy may be, for example, an alloy of lithium and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically may be in the form of a lithium metal thin film or lithium metal powder.

The method of forming the negative electrode active material is not particularly limited, and a method of forming a layer or film commonly used in the art may be used. For example, a method such as compression, coating, or deposition may be used. In addition, a case, in which a thin film of metallic lithium is formed on a metal plate by initial charging after assembling a battery without a lithium thin film in the current collector, is also comprised in the negative electrode of the present invention.

The electrically conductive material is a material that electrically connects the negative electrode active material and the electrolyte to serve as a path for electrons to move from the current collector to the negative electrode active material, and may be used without limitation as long as it has electrical conductivity.

For example, as the electrically conductive material, graphite such as natural graphite and artificial graphite; carbon black, such as Super-P, Denka black, acetylene black, Ketjen black, channel black, furnace black, lamp black, and thermal black; carbon derivatives such as carbon nanotubes and fullerenes; electrical conductivity fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The binder is the same as that described in the binder layer.

The electrolyte contains lithium ions, and is to cause an electrochemical oxidation or reduction reaction at the positive electrode and the negative electrode through them.

As the electrolyte, all of those commonly used in a lithium secondary battery may be used.

For example, lithium salts that may be included as an electrolyte in the electrolyte solution may be used without limitation as long as they are commonly used in electrolyte for a lithium secondary battery. For example, the anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN(C₂F₅SO₂)₂(Lithium bis(perfluoroethylsulfonyl)imide, BETI), LiN(CF₃SO₂)₂(Lithium bis(Trifluoromethanesulfonyl)imide, LiTFSI), LiN(CₐF₂ₐ₊₁SO₂)(C_{b}F_{2b+1}SO₂) (wherein a and b are natural numbers, preferably 1≤a≤20, and 1≤b≤20), lithium poly[4,4'-(hexafluoroisopropylidene)diphenoxy]sulfonylimide (LiPHFIPSI), LiCl, LiI, LiB(C₂O₄)₂ and LiNO₃, and among them, a sulfonyl group-containing imide lithium compound such as LiTFSI, BETI or LiPHFIPSI may be more preferable.

In the electrolyte solution used in the present invention, the organic solvent contained in the electrolyte may be used without limitation so long as they are conventionally used in the electrolyte solution for a lithium secondary battery. Typically, at least one selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, tetraethylene glycol dimethyl ether (TEGDME), dioxolane (DOL), dimethylsulfuroxide, acetonitrile, dimethoxyethane, diethoxyethane, vinylene carbonate, sulfolane, gamma-butyrolactone, propylene sulfite, and tetrahydrofuran, and a mixture of two or more of them, and the like can be used representatively. In particular, ethylene carbonate and propylene carbonate which are cyclic carbonates among the carbonate-based organic solvents are highly viscous organic solvents, which can be preferably used because they have a high dielectric constant and dissociate lithium salts in the electrolyte well. If such cyclic carbonates are mixed with a linear carbonate having a low viscosity and a low dielectric constant, such as dimethyl carbonate and diethyl carbonate in an appropriate ratio, an electrolyte solution having a high electrical conductivity can be made, and thus it can be used more preferably.

The electrolyte may further comprise a nitric acid or nitrous acid-based compound as an additive in addition to the lithium salt and the organic solvent described above.

The nitric acid or nitrous acid-based compound is not particularly limited in the present invention, but may be at least one selected from the group consisting of inorganic nitric acid or nitrous acid-based compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably may be lithium nitrate.

A separator may be additionally comprised between the positive electrode and the negative electrode.

The separator separates or insulates the positive electrode and the negative electrode from each other and enables lithium ions to be transported between the positive electrode and the negative electrode, and may be made of a porous non-conductive or insulating material. The separator may be used without particular limitation as long as it is used as a separator in a typical lithium secondary battery. The separator may be an independent member such as a film or a coating layer added to the positive electrode and/or the negative electrode.

As the separator, a separator with excellent impregnating ability for the electrolyte along with low resistance to ion migration in the electrolyte is preferable.

The separator may be made of a porous substrate. Any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, if the thickness is excessively thinner than the lower limit described above, mechanical properties are deteriorated and thus the separator may be easily damaged during use of the battery.

The average size and porosity of the pores present in the porous substrate are also not particularly limited, but may be 0.001 *µ*m to 50 *µ*m and 10 to 95%, respectively.

The type of lithium secondary battery as described above is not particularly limited, and may be, for example, a jelly-roll type, a stack type, a stack-folding type (including a stack-Z-folding type), or a lamination-stack type, preferably a stack-folding type.

The negative electrode, the separator, and the positive electrode as described above are sequentially stacked, and the electrolyte is injecting to prepare an electrode assembly, and then the electrode assembly is placed in a battery case and sealed with a cap plate and a gasket to manufacture a lithium secondary battery.

In this case, the lithium secondary battery can be classified into various types of batteries such as lithium-sulfur secondary battery, lithium-air battery, lithium-oxide battery, and lithium all-solid-state battery depending on the materials of positive electrode/negative electrode used, can be classified into cylindrical, rectangular, coin-shaped, pouch type depending on the type, and can be divided into bulk type and thin film type depending on the size. The structure and preparation method of these batteries are well known in the art, and thus detailed description thereof is omitted.

In the present invention, since the lithium secondary battery uses a positive electrode material in the form of a free-standing film comprising a sulfur-carbon composite as a positive electrode, it may be a lithium-sulfur secondary battery. The lithium-sulfur secondary battery may use lithium metal as a negative electrode active material. During the discharging of the lithium-sulfur secondary battery, an oxidation reaction of lithium occurs at the negative electrode and a reduction reaction of sulfur occurs at the positive electrode. At this time, the reduced sulfur is combined with lithium ions moved from the negative electrode, is converted into lithium polysulfide, and is finally accompanied by a reaction to form lithium sulfide.

Also, the present invention provides a battery module including the lithium secondary battery described above as a unit battery.

The battery module may be used as a power source for medium to large-sized devices requiring high temperature stability, long cycle characteristics, high-capacity characteristics, and the like.

Examples of the medium- to large-sized devices may comprise, but are not limited to, a power tool that is powered by a battery powered motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system.

Hereinafter, preferred examples of the present invention will be described in order to facilitate understanding of the present invention. The invention is defined in the appended claims.

### Preparation Example 1: Preparation of sulfur-carbon composite

Sulfur (S) and carbon nanotubes (CNT) were uniformly mixed in a solid state in a weight ratio of 65:35, and ball-milled at 100 rpm for 1 hour to prepare a mixture.

Sulfur-carbon composites (S-CNTs) were prepared by heat-treating the mixture at 155 °C for 35 minutes so that sulfur was supported into the pores of CNTs and coated on their surfaces. In this case, the CNTs having a specific surface area of 350 m²/g were used.

### Example 1

### (1) Manufacture of positive electrode

The sulfur-carbon composites (S-CNTs) obtained in Preparation Example 1, the electrically conductive material, and the binder were mixed in a weight ratio of 90:5:5 to prepare a slurry, and then it was coated on an aluminum current collector with a thickness of 20 *µ*m, dried and rolled to form a wet positive electrode active material layer. In this case, CNT having a specific surface area of 300 m² and a particle size of 20 *µ*m was used as the electrically conductive material, and a styrene butadiene rubber (SBR) was used as the binder.

The sulfur-carbon composites (S-CNTs) of Preparation Example 1 were filled in a mold, and then, pressurized at a pressure of 10 MPa using a hydraulic press to prepare a free-standing film-type positive electrode material made of a carbon-containing sulfur melt.

The freestanding film-type positive electrode material was laminated on one surface of the wet positive electrode active material layer and then pressurized to form a dry positive electrode active material layer.

A positive electrode for a lithium secondary battery in which an aluminum current collector, the wet positive electrode active material layer and the dry positive electrode active material layer were sequentially stacked was manufactured.

### (2) Manufacture of lithium-sulfur secondary battery

The prepared positive electrode and lithium metal having a thickness of 150 *µ*m were prepared as negative electrodes.

The electrolyte solution was prepared by dissolving lithium bis(trifluoromethanesulfonyl)imide (LiTFSI) at a concentration of 1 M and lithium nitrate (LiNO₃) at a concentration of 0.1 M in an organic solvent obtained by mixing tetraethylene glycol dimethyl ether (TEGDME) /dioxolane (DOL)/dimethoxyethane (DME) in a volume ratio of 1:1:1.

A porous polyethylene separator having a thickness of 20 *µ*m and a porosity of 45% was interposed between the positive electrode and the negative electrode to manufacture an electrode assembly, and the electrode assembly was placed inside the case, and then the electrolyte was injected into the case to manufacture a lithium-sulfur secondary battery in the form of a pouch cell.

### Comparative Example 1

A positive electrode and a lithium-sulfur secondary battery were manufactured in the same manner as in Example 1, except that a dry positive electrode active material layer is not formed, and only a wet positive electrode active material layer is formed.

### Comparative Example 2

A positive electrode and a lithium-sulfur secondary battery were manufactured in the same manner as in Example 1, except that a wet positive electrode active material layer is not formed, and a dry positive electrode active material layer is formed on one surface of the aluminum current collector. In this case, SBR (Styrene Butadiene Rubber), which is a binder, was applied on the aluminum current collector, and then the dry positive electrode active material layer was adhered.

### Comparative Example 3

A dry active material layer was adhered on an aluminum current collector in the same manner as Comparative Example 2, except that the binder is not used.

### Experimental Example 1: Evaluation of the physical properties of the battery

For the lithium secondary batteries in the form of pouch cells manufactured in Example and Comparative Examples, the capacity, nominal voltage, moisture content, and lifetime characteristics were measured in the following way, and the results are shown in Table 1 below.

In the case of Comparative Example 3, the evaluation of physical properties was not performed, since the dry positive electrode active material layer itself does not have adhesive force and does not adhere on the current collector without using a separate binder, and thus the positive electrode cannot be manufactured.

### (1) Capacity

After 2.5 cycles of 0.1C charging/0.1C discharging, and then, 3 cycles of 0.2C charging/0.2C discharging, at 25°C, the capacity was measured at a temperature of 25°C and 45°C under 0.2C charging/0.3C discharging conditions.

### (2) Nominal voltage

The nominal voltage is a nominal voltage value for calling a given voltage system in the power system, which generally has a value slightly lower than the electromotive force and usually means the center value of the discharging curve (mean value of discharging voltage).

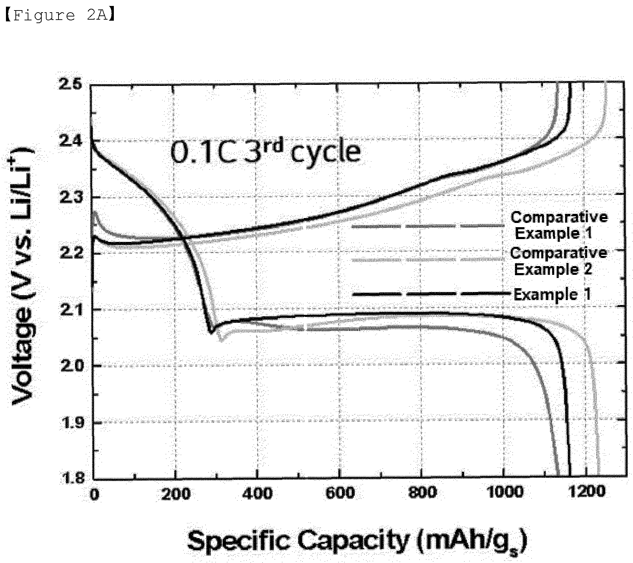

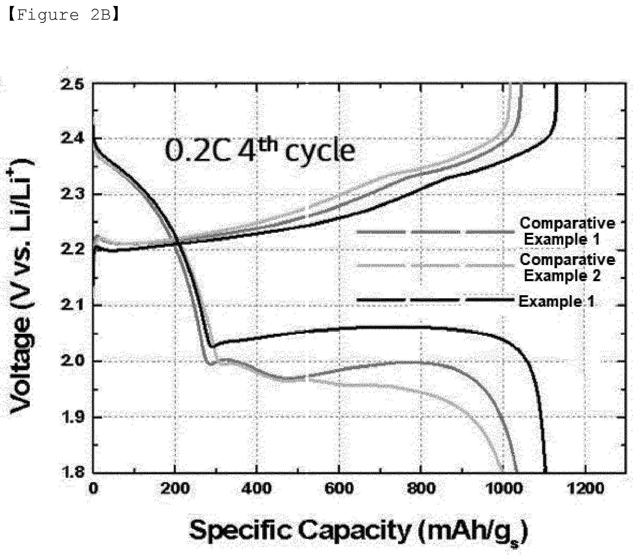

In this experimental example, the nominal voltage was obtained as the center value of the discharging curve as shown in FIGs. 2A and 2B.

### (3) Moisture content

The moisture content was measured using a moisture measuring instrument (Metrohm 901 KF Tirando).

### (4) Lifetime characteristics

The point at which the capacity retention rate reached 80% of the initial capacity was set as the last cycle of lifetime.

**Table 1:**

| | | Example 1 | Comparative Example 1 | Comparative Example 2 |
|---|---|---|---|---|
| Capacity | 0.1C initial capacity (mAh/gs) | 1154 | 1145 | 1232 |
| | Capacity per electrode (mAh/g_{active} ) | 1154 | 1088 | 1232 |
| | 0.2C initial capacity (mAh/gs) | 1101 | 1017 | 1001 |
| Nominal voltage | 0.1C discharging nominal voltage(V) | 2.133 | 2.110 | 2.124 |
| | 0.2C discharging nominal voltage(V) | 2.096 | 2.040 | 2.040 |
| Moisture content (ppm) | | 112 | 1428 | 28 |
| Lifetime (Retention 80%) | | 121 | 60 | 41 |

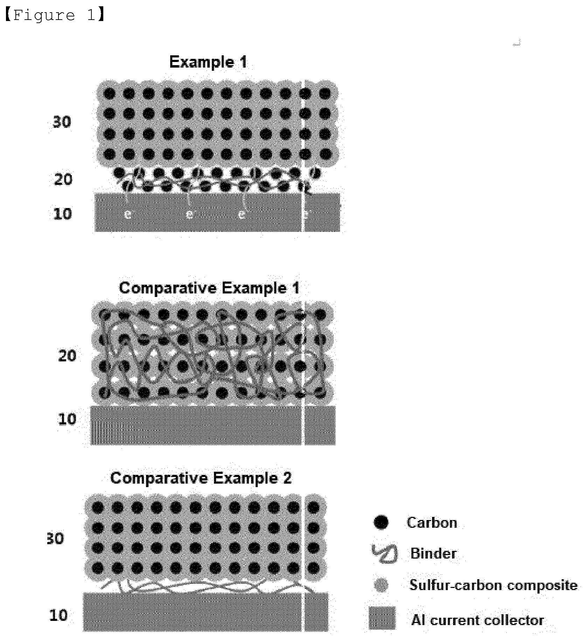

FIG. 1 shows longitudinal cross-sections of the positive electrodes for the lithium-sulfur secondary battery manufactured in Example 1, Comparative Example 1, and Comparative Example 2, respectively.

As shown in FIG. 1, the positive electrode manufactured in Example 1 has a structure in which the current collector (10), the wet positive electrode active material layer (20) and the dry positive electrode active material layer (30) are stacked. The wet positive electrode active material layer (20) exhibits a relatively high porosity compared to the dry positive electrode active material layer (30), and the dry positive electrode active material layer (30) exhibits a relatively high-density characteristic compared to the wet positive electrode active material layer (20). In addition, the resistance may be improved when the current collector (10) and the dry positive electrode active material layer (30) are directly stacked due to the wet positive electrode active material layer (20). In addition, the wet positive electrode active material layer (20) has good adhesive force with the dry positive electrode active material layer (30) and has good adhesive force with the current collector (10), and thus the durability of the positive electrode can also be improved.

In addition, the positive electrode manufactured in Comparative Example 1 has a structure in which the current collector (10) and the wet positive electrode active material layer (20) are stacked. Since a binder is contained in the inside of the wet positive electrode active material layer (20), there is a problem that resistance is increased.

In addition, the positive electrode manufactured in Comparative Example 2 has a structure in which the current collector (10) and the dry positive electrode active material layer (30) are stacked. Since a binder is applied between the current collector (10) and the dry positive electrode active material layer (30), there may be a problem that the contact resistance by the binder is increased, and the high-rate characteristic is deteriorated.

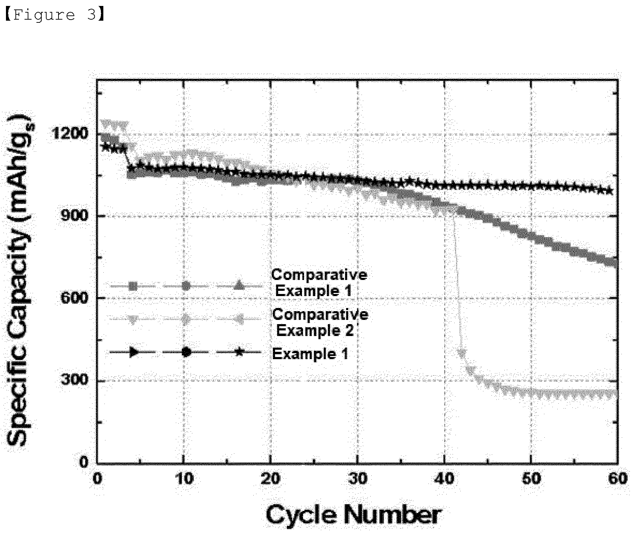

In addition, as shown in Table 1, FIGs. 2A, 2B and 3, it can be seen that Example 1 (a lithium-sulfur secondary battery comprising a positive electrode having a dry positive electrode active material layer and a wet positive electrode active material layer formed) is superior to Comparative Example 1 (a lithium-sulfur secondary battery comprising a positive electrode having a wet positive electrode active material layer formed) in the capacity, high-rate characteristic, overvoltage and lifetime characteristic.

In addition, it can be seen that Example 1 is superior to Comparative Example 2 (a lithium-sulfur secondary battery comprising a positive electrode having a dry positive electrode active material layer formed) in the high-rate characteristic, overvoltage and lifetime characteristic. The reason that the difference in capacities was not large between Example 1 and Comparative Example 2 at 0.1C is due to the low charging/discharging rate in which the resistance does not act significantly. That is, as shown in FIG. 2b, it can be seen that when the discharge rate is 0.2C, the capacity drops sharply due to the resistance of Comparative Example 2.

### [Description of Symbols]

- 10:: Current collector
- 20:: Wet positive electrode active material layer
- 30:: Dry positive electrode active material layer

## Claims

1. A positive electrode for a lithium secondary battery, comprising:
a positive electrode current collector;
a wet positive electrode active material layer formed on one surface of the positive electrode current collector; and
a dry positive electrode active material layer formed on the wet positive electrode active material layer;
wherein the wet positive electrode active material layer comprises a sulfur-carbon composite, a binder, and an electrically conductive material, and
the dry positive electrode active material layer is composed of a carbon-containing sulfur melt formed by dispersing a porous carbon material in the sulfur melt.

2. The positive electrode for the lithium secondary battery according to claim 1, wherein the wet positive electrode active material layer comprises 40 to 80 % by weight of the sulfur-carbon composite, 1 to 30 % by weight of the binder and 0.5 to 30 % by weight of the electrically conductive material.

3. The positive electrode for the lithium secondary battery according to claim 1, wherein the loading amount of the wet positive electrode active material layer is 0.1 mAh/cm² to 0.5 mAh/cm², and the loading amount of the wet positive electrode active material layer is 2% to 20% of the loading amount of the dry positive electrode active material layer.

4. The positive electrode for the lithium secondary battery according to claim 1, wherein the porosity of the wet positive electrode active material layer is 30% to 90% measured as set forth in the description.

5. The positive electrode for the lithium secondary battery according to claim 1, wherein the density of the wet positive electrode active material layer is 0.2 to 1.4 g/cm³.

6. The positive electrode for the lithium secondary battery according to claim 1, wherein the porosity of the dry positive electrode active material layer is 68% or less measured as set forth in the description.

7. The positive electrode for the lithium secondary battery according to claim 1, wherein the dry positive electrode active material layer has an internal adhesive force of 10 gf/cm or more.

8. A method for manufacturing a positive electrode for a lithium secondary battery, comprising the steps of:
(1) applying a slurry for a positive electrode containing a sulfur-carbon composite, a binder and a electrically conductive material to one surface of a positive electrode current collector to form a wet positive electrode active material layer; and
(2) attaching a dry positive electrode active material layer, which is a free-standing film-type positive electrode material, to one surface of the wet positive electrode active material layer;
wherein the dry positive electrode active material layer, which is a free-standing film-type positive electrode material, is prepared by a process comprising the steps of,
(a) mixing sulfur and a porous carbon material;
(b) heat-treating the mixture formed in step (a); and
(c) filling the sulfur-carbon composite formed in step (b) in a container, and then pressing it to form a carbon-containing sulfur melt.

9. The method for manufacturing the positive electrode for the lithium secondary battery according to claim 8, wherein the heat treatment is performed under a temperature condition of 130 to 170 °C.

10. The method for manufacturing the positive electrode for the lithium secondary battery according to claim 8, wherein the pressurization is performed under a pressure condition of 0.8 to 15 MPa.

11. A lithium secondary battery, comprising:
the positive electrode for the lithium secondary battery according to claim 1;
a negative electrode comprising lithium metal or a lithium alloy;
a separator positioned between the positive electrode and the negative electrode; and
an electrolyte impregnated with the positive electrode, the negative electrode and the separator.

12. The lithium secondary battery according to claim 11, wherein the lithium secondary battery is a lithium-sulfur secondary battery.

13. The lithium secondary battery according to claim 11, wherein the positive electrode has the loading amount of sulfur from 3.0 mAh/cm² to 5.0 mAh/cm².

## Patentansprüche

1. Positive Elektrode für eine Lithium-Sekundärbatterie, umfassend:
einen Stromabnehmer der positiven Elektrode;
eine nasse Aktivmaterialschicht der positiven Elektrode, die auf einer Oberfläche des Stromabnehmers der positiven Elektrode ausgebildet ist; und
eine trockene Aktivmaterialschicht der positiven Elektrode, die auf der nassen Aktivmaterialschicht der positiven Elektrode ausgebildet ist;
wobei die nasse Aktivmaterialschicht der positiven Elektrode einen Schwefel-Kohlenstoff-Verbundstoff, ein Bindemittel und ein elektrisch leitfähiges Material umfasst, und
die trockene Aktivmaterialschicht der positiven Elektrode aus einer kohlenstoffhaltigen Schwefelschmelze besteht, die durch Dispergieren eines porösen Kohlenstoffmaterials in der Schwefelschmelze ausgebildet ist.

2. Positive Elektrode für die Lithium-Sekundärbatterie nach Anspruch 1, wobei die nasse Aktivmaterialschicht der positiven Elektrode 40 bis 80 Gew.-% des Schwefel-Kohlenstoff-Verbundstoffs, 1 bis 30 Gew.-% des Bindemittels und 0,5 bis 30 Gew.-% des elektrisch leitfähigen Materials umfasst.

3. Positive Elektrode für die Lithium-Sekundärbatterie nach Anspruch 1, wobei die Beladungsmenge der nassen Aktivmaterialschicht der positiven Elektrode 0,1 mAh/cm² bis 0,5 mAh/cm² beträgt und die Beladungsmenge der nassen Aktivmaterialschicht der positiven Elektrode 2 % bis 20 % der Beladungsmenge der trockenen Aktivmaterialschicht der positiven Elektrode beträgt.

4. Positive Elektrode für die Lithium-Sekundärbatterie nach Anspruch 1, wobei die Porosität der nassen Aktivmaterialschicht der positiven Elektrode 30 % bis 90 % beträgt, gemessen wie in der Beschreibung dargelegt.

5. Positive Elektrode für die Lithium-Sekundärbatterie nach Anspruch 1, wobei die Dichte der nassen Aktivmaterialschicht der positiven Elektrode 0,2 bis 1,4 g/cm³ beträgt.

6. Positive Elektrode für die Lithium-Sekundärbatterie nach Anspruch 1, wobei die Porosität der trockenen Aktivmaterialschicht der positiven Elektrode 68 % oder weniger beträgt, gemessen wie in der Beschreibung dargelegt.

7. Positive Elektrode für die Lithium-Sekundärbatterie nach Anspruch 1, wobei die trockene Aktivmaterialschicht der positiven Elektrode eine innere Haftkraft von 10 gf/cm oder mehr aufweist.

8. Verfahren zur Herstellung einer positiven Elektrode für eine Lithium-Sekundärbatterie, umfassend die Schritte:
(1) Aufbringen einer Aufschlämmung für eine positive Elektrode, die einen Schwefel-Kohlenstoff-Verbundstoff, ein Bindemittel und ein elektrisch leitfähiges Material enthält, auf eine Oberfläche eines Stromabnehmers der positiven Elektrode, um eine nasse Aktivmaterialschicht der positiven Elektrode zu bilden; und
(2) Anbringen einer trockenen Aktivmaterialschicht der positiven Elektrode, die ein freistehendes filmartiges Material der positiven Elektrode ist, auf einer Oberfläche der nassen Aktivmaterialschicht der positiven Elektrode;
wobei die trockene Aktivmaterialschicht der positiven Elektrode, die ein freistehendes filmartiges Material der positiven Elektrode ist, durch ein Verfahren hergestellt wird, das die Schritte umfasst:
(a) Mischen von Schwefel und einem porösen Kohlenstoffmaterial;
(b) Wärmebehandeln der in Schritt (a) gebildeten Mischung; und
(c) Füllen des in Schritt (b) gebildeten Schwefel-Kohlenstoff-Verbundstoffs in einen Behälter und dann Pressen desselben, um eine kohlenstoffhaltige Schwefelschmelze zu bilden.

9. Verfahren zur Herstellung der positiven Elektrode für die Lithium-Sekundärbatterie nach Anspruch 8, wobei die Wärmebehandlung unter einer Temperaturbedingung von 130 bis 170 °C durchgeführt wird.

10. Verfahren zur Herstellung der positiven Elektrode für die Lithium-Sekundärbatterie nach Anspruch 8, wobei die Druckbeaufschlagung unter einer Druckbedingung von 0,8 bis 15 MPa durchgeführt wird.

11. Lithium-Sekundärbatterie, umfassend:
die positive Elektrode für die Lithium-Sekundärbatterie nach Anspruch 1;
eine negative Elektrode, umfassend Lithiummetall oder eine Lithiumlegierung;
einen Separator, der zwischen der positiven Elektrode und der negativen Elektrode positioniert ist; und
einen Elektrolyten, der mit der positiven Elektrode, der negativen Elektrode und dem Separator imprägniert ist.

12. Lithium-Sekundärbatterie nach Anspruch 11, wobei die Lithium-Sekundärbatterie eine Lithium-Schwefel-Sekundärbatterie ist.

13. Lithium-Sekundärbatterie nach Anspruch 11, wobei die positive Elektrode die Beladungsmenge an Schwefel von 3,0 mAh/cm² bis 5,0 mAh/cm² aufweist.

## Revendications

1. Électrode positive pour une batterie secondaire au lithium, comprenant :
un collecteur de courant d'électrode positive ;
une couche de matière active d'électrode positive humide réalisée sur une surface du collecteur de courant d'électrode positive ; et
une couche de matière active d'électrode positive sèche réalisée sur la couche de matière active d'électrode positive humide ;
la couche de matière active d'électrode positive humide comprenant un composite soufre-carbone, un liant, et un matériau électro-conducteur, et
la couche de matière active d'électrode positive sèche étant composée d'un bain de soufre carboné réalisé par la dispersion d'un matériau carboné poreux dans le bain de soufre.

2. Électrode positive pour batterie secondaire au lithium selon la revendication 1, la couche de matière active de l'électrode positive humide comprenant de 40 à 80 % en poids du composite soufre-carbone, de 1 à 30 % en poids du liant, et 0,5 à 30 % en poids du matériau électro-conducteur.

3. Électrode positive pour la batterie secondaire au lithium selon la revendication 1, la quantité de charge de la couche de matière active de l'électrode positive humide étant comprise entre 0,1 mAh/cm² et 0,5 mAh/cm², et la quantité de charge de la couche de matière active de l'électrode positive humide étant comprise entre 2 % et 20 % de la quantité de charge de la couche de matière active de l'électrode positive sèche.

4. Électrode positive pour la batterie secondaire au lithium selon la revendication 1, la porosité de la couche de matière active de l'électrode positive humide étant comprise entre 30 % et 90 % mesurée de la façon indiquée dans la description.

5. Électrode positive pour la batterie secondaire au lithium selon la revendication 1, la densité de la couche de matière active de l'électrode positive humide étant comprise entre 0,2 % et 1,4 % g/cm³.

6. Électrode positive pour la batterie secondaire au lithium selon la revendication 1, la porosité de la couche de matière active de l'électrode positive sèche étant égale à 68 % ou moins, mesurée de la façon indiquée dans la description.

7. Électrode positive pour la batterie secondaire au lithium selon la revendication 1, le pouvoir adhésif interne de la couche de matière active de l'électrode positive sèche mesurant 10 gf/cm ou davantage.

8. Procédé de fabrication d'une électrode positive pour une batterie secondaire au lithium, comprenant les étapes suivantes :
(1) application d'une suspension pour une électrode positive contenant un composite soufre-carbone, un liant, et un matériau électro-conducteur sur une surface d'un collecteur de courant d'électrode positive pour former une couche de matière active d'électrode positive humide ; et
(2) la fixation d'une couche de matière active d'électrode positive sèche, qui est une matière d'électrode positive de type film autonome, sur une surface de la couche de matière active d'électrode positive humide ;
la couche de matière active d'électrode positive sèche, qui est une matière d'électrode positive de type film autonome, est préparée à l'aide d'un procédé comprenant les étapes suivantes :
a) mélange de soufre et d'un matériau carboné poreux ;
b) traitement thermique du mélange réalisé à l'étape a) ; et
c) remplissage du composite soufre-carbone réalisé à l'étape (b) dans un récipient, en le pressant ensuite pour former un bain de soufre carboné.

9. Procédé de fabrication de l'électrode positive pour la batterie secondaire au lithium selon la revendication 8, le traitement thermique étant effectué sous une température comprise entre 130 et 170°C.

10. Procédé de fabrication de l'électrode positive pour la batterie secondaire au lithium selon la revendication 8, la mise sous pression étant effectuée en présence d'une pression comprise entre 0.8 et 15 MPa.

11. Batterie secondaire au lithium comprenant :
l'électrode positive pour la batterie secondaire au lithium selon la revendication 1;
une électrode négative comprenant du lithium métal ou un alliage de lithium ;
un séparateur positionné entre l'électrode positive et l'électrode négative ; et
un électrolyte imprégné avec l'électrode positive, l'électrode négative et le séparateur.

12. Batterie secondaire au lithium selon la revendication 11, la batterie secondaire au lithium étant une batterie secondaire lithium-soufre.

13. Batterie secondaire au lithium selon la revendication 11, la quantité de charge de soufre de l'électrode positive étant comprise entre 3,0 mAh/cm² et 5,0 mAh/cm².
